# EUROPÄISCHE PATENTANMELDUNG

(11) **EP 4 537 911 A1**
(43) Veröffentlichungstag der Anmeldung: **16.04.2025**
(21) Anmeldenummer: 24192135.2
(22) Anmeldetag: 31.07.2024
(51) Int. Cl.: A62C 99/00

(54) **BRANDSCHUTZSYSTEM UND VERFAHREN ZUR REDUZIERUNG EINER BRANDGEFAHR IN EINEM SCHUTZRAUM**

(30) Priorität: 11.10.2023 DE 102023209957
(71) Anmelder: Hy.Air Energy GmbH, 22767 Hamburg (DE)
(72) Erfinder: Frahm, Lars, 23970 Wismar (DE); Exler, Andreas, 22397 Hamburg (DE)
(74) Vertreter: Patentanwälte Hemmer Lindfeld Frese Partnerschaft mbB

(57) **Zusammenfassung**

Die vorliegende Erfindung betrifft ein Brandschutzsystem (1) zur Reduzierung einer Brandgefahr in einem Schutzraum, wobei das Brandschutzsystem (1) aufweist:
- eine Brennstoffzelle (3) mit einem von einem Anodenausgang (27) streng getrennten Kathodenabgasausgang (25) zur Bereitstellung eines sauerstoffreduzierten Kathodenabgases mit einem Sauerstoffgehalt von höchstens 15,0 Vol.-% am Kathodenabgasausgang (25),
- ein stromabwärts des Kathodenabgasausgangs (25) angeschlossenes Trocknungssystem (35) zum Trocknen des sauerstoffreduzierten Kathodenabgases, bevor das sauerstoffreduzierte Kathodenabgas in den Schutzraum (54) eingeleitet wird, und
- ein Kontrollsystem (51), das dazu eingerichtet ist, einen aktuellen Taupunkt des vom Trocknungssystem (35) getrockneten, sauerstoffreduzierten Kathodenabgases zu bestimmen und das getrocknete, sauerstoffreduzierte Kathodenabgas nur dann in den Schutzraum (54) einzuleiten, wenn der aktuelle Taupunkt unterhalb eines einstellbaren maximalen Taupunkts liegt.

## Beschreibung

Die vorliegende Erfindung betrifft ein Brandschutzsystem und ein Verfahren zur Reduzierung einer Brandgefahr in einem Schutzraum. Ein solches System und Verfahren kann auch zur Brandbekämpfung oder diese unterstützend eingesetzt werden.

Aus der DE 10 2005 053 692 B3 ist es bekannt, dass sauerstoffreduziertes Kathodenabgas einer Brennstoffzelle dazu verwendet werden kann, die Brandgefahr in einem Raum, beispielsweise einem Flugzeug, zu reduzieren. Es hat sich herausgestellt, dass solche Brandschutzsysteme unter Verwendung des sauerstoffreduzierten Kathodenabgases einer Brennstoffzelle insbesondere dort gut eingesetzt werden können, wo herkömmliche Brandschutzsysteme, wie Wassersprinkler, nicht eingesetzt werden können. Dies betrifft insbesondere besonders großvolumige Schutzräume mit einem Volumen von 100.000 m³ oder mehr. Insbesondere teilautomatisierte oder vollautomatische Hochregallager mit hohen Packungsdichten können nicht mit Sprinkleranlagen ausgestattet werden, um effektiv die Brandgefahr zu reduzieren. Das gleiche gilt für Tiefkühllager, in denen Wasserleitungen zufrieren würden. Auch bei Archiv- und Serverräumen kann ein Brandschutzsystem auf Basis des sauerstoffreduzierten Kathodenabgases einer Brennstoffzelle gegenüber herkömmlichen Brandschutzsystemen vorteilhaft sein.

Ein Problem stellt es jedoch dar, wenn durch das sauerstoffreduzierte Kathodenabgas eine hohe Feuchtigkeitsmenge in den Schutzraum geleitet wird. In einem Tiefkühllager könnte die Feuchtigkeit als Schnee oder Eis unerwünscht ausfallen. In Archivräumen könnte kondensierte Feuchtigkeit zu unerwünschter Schimmelbildung führen. In automatisierten Hochregallagern oder Serverräumen könnte kondensierte Feuchtigkeit unerwünscht zu Korrosion oder Kurzschlüssen führen.

Aus der DE 10 2005 053 692 B3 ist es bekannt, das wasserhaltige sauerstoffreduzierte Kathodenabgas mittels eines Kondensators zu trocknen und das auskondensierte Wasser für andere Zwecke zu verwenden. Dabei ist allerdings unklar, ob das sauerstoffreduzierte Kathodenabgas für die Anwendung im Schutzraum trocken genug ist oder nicht.

Es ist daher die Aufgabe der vorliegenden Erfindung, ein Brandschutzsystem und Verfahren zur Reduzierung einer Brandgefahr in einem Schutzraum bereitzustellen, das sicherstellt, dass das sauerstoffreduzierte Kathodenabgas je nach Anwendungsfall trocken genug für den Schutzraum ist.

Gelöst wird diese Aufgabe durch ein Brandschutzsystem und Verfahren zur Reduzierung einer Brandgefahr in einem Schutzraum gemäß den unabhängigen Ansprüchen. Bevorzugte Ausführungsformen der Erfindung sind den Unteransprüchen, der Beschreibung und den Figuren zu entnehmen.

Gemäß einem ersten Aspekt der vorliegenden Erfindung wird ein Brandschutzsystem zur Reduzierung einer Brandgefahr in einem Schutzraum bereitgestellt, wobei das Brandschutzsystem aufweist:
- eine Brennstoffzelle mit einem von einem Anodenausgang streng getrennten Kathodenabgasausgang zur Bereitstellung eines sauerstoffreduzierten Kathodenabgases mit einem Sauerstoffgehalt von höchstens 15,0 Vol.-% am Kathodenabgasausgang,
- ein stromabwärts des Kathodenabgasausgangs angeschlossenes Trocknungssystem zum Trocknen des sauerstoffreduzierten Kathodenabgases, bevor das sauerstoffreduzierte Kathodenabgas in den Schutzraum eingeleitet wird, und
- ein Kontrollsystem, das dazu eingerichtet ist, einen aktuellen Taupunkt des vom Trocknungssystem getrockneten, sauerstoffreduzierten Kathodenabgases zu bestimmen und das getrocknete, sauerstoff reduzierte Kathodenabgas nur dann in den Schutzraum einzuleiten, wenn der aktuelle Taupunkt unterhalb eines einstellbaren maximalen Taupunkts liegt.

Die Erfindung ist insbesondere dadurch gekennzeichnet, dass das sauerstoffreduzierte Kathodenabgas der Brennstoffzelle zunächst getrocknet wird und dann der aktuelle Taupunkt des getrockneten, sauerstoffreduzierten Kathodenabgases bestimmt wird. Es wird daraufhin nur dann das getrocknete, sauerstoffreduzierte Kathodenabgas in den Schutzraum geleitet, wenn der aktuelle Taupunkt unterhalb eines einstellbaren maximalen Taupunkts liegt. Das Kontrollieren des aktuellen Taupunkts des getrockneten, sauerstoffreduzierten Kathodenabgases hat den Vorteil, dass das erfindungsgemäße Brandschutzsystem bzw. -verfahren unabhängig von der Temperatur des getrockneten, sauerstoffreduzierten Kathodenabgases ist. Es kann daher auf eine Kühlung des getrockneten, sauerstoffreduzierten Kathodenabgases unabhängig vom Anwendungsfall verzichtet werden. Das Kathodenabgas kann bei entsprechend niedrigem Taupunkt eine viel höhere Temperatur als der Schutzraum haben, ohne viel Wärmeleistung in den Schutzraum einzubringen. Beispielsweise kann bei einer Anwendung für ein Tiefkühllager der maximale Taupunkt auf -20C° eingestellt sein, sodass Kathodenabgas mit einem aktuellen Taupunkt unterhalb von -20C° bei einerTemperatur von +50C° oder mehr in das Tiefkühllager eingeleitet werden kann. Die mit dem Kathodenabgas dabei eingebrachte Wärmeleistung ist bei einem so niedrigen aktuellen Taupunkt vernachlässigbar klein.

Optional kann das Kontrollsystem mindestens ein ansteuerbares Verschlussventil aufweisen, wobei das Kontrollsystem dazu eingerichtet ist, das mindestens eine Verschlussventil anzusteuern und zum Schutzraum hin zu verschließen, wenn der aktuelle Taupunkt des getrockneten, sauerstoffreduzierten Kathodenabgases bei oder oberhalb des einstellbaren maximalen Taupunkts liegt. Das Verschlussventil kann im Grundzustand geöffnet sein und schließen, wenn der aktuelle Taupunkt über den eingestellten maximalen Taupunkt steigt. Alternativ dazu kann das Verschlussventil einen geschlossenen Grundzustand haben und nur öffnen, wenn der aktuelle Taupunkt unter den eingestellten maximalen Taupunkt fällt.

Optional kann das Kontrollsystem mindestens ein ansteuerbares Öffnungsventil aufweisen, wobei das Kontrollsystem dazu eingerichtet ist, das mindestens eine Öffnungsventil anzusteuern und zur Umgebung zu öffnen, wenn der aktuelle Taupunkt des vom getrockneten, sauerstoffreduzierten Kathodenabgases bei oder oberhalb des einstellbaren maximalen Taupunkts liegt. Es ist wichtig, dass am Kathodenabgasausgang keine Druckerhöhung entsteht, die irreparable Schäden an der Brennstoffzelle hervorrufen könnte. Daher ist es von Vorteil, wenn das mindestens eine Verschlussventil und/oder insbesondere das mindestens eine Öffnungsventil ein schnell schaltendes Magnetventil ist. Um einem Druckanstieg am Kathodenabgasausgang vorzubeugen, kann das mindestens eine Öffnungsventil geöffnet werden, während oder bevor das mindestens eine Verschlussventil geschlossen wird.

Optional können das mindestens eine Verschlussventil und das mindestens eine Öffnungsventil separat ansteuerbare Ventile sein und/oder in mindestens einem 3/2-Wegeventil zusammen integriert sein.

Optional kann das Brandschutzsystem mindestens ein Sicherheitsventil aufweisen, das stromaufwärts des Trocknungssystems angeordnet ist und selbsttätig und/oder vom Kontrollsystem angesteuert zur Umgebungsluft öffnet, wenn der Druck des sauerstoffreduzierten Kathodenabgases einen Maximalwert übersteigt. Das Sicherheitsventil dient damit dem Schutz der Brennstoffzelle notfalls vor einem zu hohen Druckanstieg am Kathodenabgasausgang. Vorzugsweise weist das Brandschutzsystem dafür einen Drucksensor auf, der stromaufwärts des Trocknungssystems angeordnet ist und dem Kontrollsystem den aktuellen Druck des sauerstoffreduzierten Kathodenabgases mitteilt.

Optional kann das Trocknungssystem dazu eingerichtet sein, eine Trocknungsleistung des Trocknungssystems zu erhöhen, wenn der aktuelle Taupunkt des vom Trocknungssystem getrockneten, sauerstoffreduzierten Kathodenabgases bei oder oberhalb des einstellbaren maximalen Taupunkts liegt. Dies ist besonders sinnvoll, wenn das Trocknungssystem noch Kapazitäten zur Erhöhung der Trocknungsleistung hat und der aktuelle Taupunkt noch relativ weit über dem eingestellten maximalen Taupunkt liegt. Die Trocknungsleistung des Trocknungssystems kann beispielsweise dadurch erhöht werden, dass eine weitere Trocknungsstufe dazu geschaltet wird.

Optional kann das Trocknungssystem eine oder mehrere Trocknungsstufen aufweisen. Insbesondere für eine Anwendung mit einem Tiefkühllager als Schutzraum können mehrere Trocknungsstufen vorteilhaft sein, um den aktuellen Taupunkt auf einen entsprechend niedrigen Wert von beispielsweise unter -20C° zu bringen. Bei einem Hochregallager, das im Bereich von 10C° bis 30C° betrieben wird, kann ein einstufiges Trocknungssystem ausreichend sein.

Optional kann das Trocknungssystem einen Adsorptionstrockner aufweisen, wobei der Adsorptionstrockner als Rotationsentfeuchter mit einem dem Kathodenabgasstrom entgegengesetzten und erhitzten Regenerationsluftstrom ausgeführt ist, wobei vorzugsweise eine Heizleistung zur Erhitzung des Regenerationsluftstroms zumindest teilweise von der Abwärme der Brennstoffzelle bereitgestellt wird. Ein Adsorptionstrockner ist insbesondere vorteilhaft in einer zweiten Trocknungsstufe für den Anwendungsfall mit einem Tiefkühllager als Schutzraum. Mit einem Adsorptionstrockner kann nämlich ein besonders hoher Trocknungsgrad und ein entsprechend niedriger Taupunkt von beispielsweise -20C° erzielt werden. Um den Adsorptionstrockner besonders effizient betreiben zu können, ist es vorteilhaft, die Heizleistung zur Erhitzung des Regenerationsluftstroms zumindest teilweise aus der Abwärme der Brennstoffzelle zu nehmen.

Optional kann sämtliche für das Brandschutzsystem benötigte elektrische Energie von der Brennstoffzelle bereitgestellt werden. Dadurch kann das Brandschutzsystem völlig autark ohne Anschluss an ein externes Stromnetz betrieben werden. Dies ist insbesondere für mobile Schutzräume vorteilhaft, beispielsweise in Form eines Containers, Aufliegers oder Transporters.

Optional kann das Brandschutzsystem ferner einen Ventilator aufweisen, der stromabwärts zumindest einer Trocknungsstufe des Trocknungssystems angeordnet und dazu eingerichtet ist, den Druck des sauerstoffreduzierten Kathodenabgases stromabwärts des Ventilators zu erhöhen. Dies hat zum einen den Vorteil, dass der Druck in der vorgelagerten Trocknungsstufe verringert wird und in einer nachgelagerten Trocknungsstufe oder zum Schutzraum hin erhöht wird. Wenn beispielsweise ein Adsorptionstrockner als zweite Trocknungsstufe eingesetzt wird, stellt der erhöhte Druck in der zweiten Trocknungsstufe sicher, dass keine Regenerationsluft in den Kathodenabgasstrom gesogen wird. Vorzugsweise wird daher ein Regenerationsluftgebläse im Regenerationsluftstrom stromabwärts des Adsorptionstrockners angeordnet, damit das Regenerationsluftgebläse die Regenerationsluft in den Adsorptionstrockner saugt und nicht drückt. Dadurch wird der Druck des Regenerationsluftstroms im Adsorptionstrockner verringert, sodass auch dadurch verhindert wird, dass Regenerationsluft in den Kathodenabgasstrom gedrückt wird.

Optional kann das Brandschutzsystem einen Wasserstoff-Katalysator aufweisen, der dazu eingerichtet ist, in dem getrockneten, sauerstoffreduzierten Kathodenabgas befindliche Restanteile von Wasserstoff vor dem Einleiten in den Schutzraum chemisch umzusetzen. Damit wird verhindert, dass etwaige Restanteile von Wasserstoff in den Schutzraum gelangen.

Vorzugsweise ist die Brennstoffzelle des Brandschutzsystems eine Protonenaustauschmembran-Brennstoffzelle (Proton Exchange Membrane Fuel Cell, PEMFC). Die Brennstoffzelle kann einen Anodenausgang aufweisen, der geschlossen oder öffenbar ist. Ohne Anodenausgang oder bei geschlossenem Anodenausgang kann die Brennstoffzelle in einem sogenannten Dead-End-Modus betrieben werden. Der gängigere Betriebsmodus einer Brennstoffzelle ist allerdings ein Flow-Through-Modus, bei dem der Anodenausgang öffenbar ist, um den der Anode zugeleiteten Brennstoff, beispielsweise Wasserstoff, bei Bedarf ablassen zu können, um die Brennstoffzelle vor einem schädlichen Anodenüberdruck zu schützen und Restbestandteile von nicht umgesetztem Brennstoff abzulassen. Dies geschieht in regelmäßigen Abständen, je nach Betriebszustand auch mehrmals pro Minute. Man nennt dies auch Anode Fuel Purge.

Es gibt Brennstoffzellen, bei denen der Anode Fuel Purge in den Kathodenabgasausgang geleitet wird, also abgelassene Brennstoffrestbestandteile mit dem Kathodenabgas vermischt werden. Solche Brennstoffzellen können für das erfindungsgemäße Brandschutzsystem nicht verwendet werden. Für das erfindungsgemäße Brandschutzsystem kann nur eine Brennstoffzelle verwendet werden, bei der der Kathodenabgasausgang streng getrennt von einem Anodenausgang ist, d.h. ein Anodenausgang nicht mit dem Kathodenabgasausgang zusammengeführt wird, oder es gar keinen Anodenausgang gibt. Jedenfalls darf kein Anode Fuel Purge in den Kathodenabgasausgang erfolgen. Der Betrieb einer Brennstoffzelle in einem Dead-End-Modus ist für das erfindungsgemäße Brandschutzsystem jedenfalls geeignet, da bei geschlossenem Anodenausgang gar kein Anode Fuel Purge stattfindet und/oder die Brennstoffzelle erst gar keinen Anodenausgang aufweist. Wenngleich eine PEMFC für das erfindungsgemäße Brandschutzsystem vorzugsweise Verwendung findet, können prinzipiell auch andere Arten von Brennstoffzellen eingesetzt werden, wie beispielsweise Alkaline Fuel Cell (AFC), Phosphoric Acid Fuel Cell (PAFC), Molten Carbonate Fuel Cell (MCFC), Solid Oxide Fuel Cell (SOFC), oder Direct Alkohol/Methanol Fuel Cell (DAFC/DMFC).

Gemäß einem weiteren Aspekt der vorliegenden Erfindung wird ein mobiler oder stationärer Schutzraum bereitgestellt mit einem zuvor beschriebenen Brandschutzsystem, wobei der Schutzraum vorzugsweise ein Lager- und/oder Tiefkühlraum ist, der vorzugsweise zumindest teilweise mit elektrischer Energie betreibbar ist, die von der Brennstoffzelle bereitstellbar ist. Insbesondere mobile Container oder Tiefkühlfahrzeuge mit Tiefkühlfracht können solche Schutzräume bilden. Vorzugsweise stellt die Brennstoffzelle die gesamte elektrische Energie für den Betrieb des Brandschutzsystems zur Verfügung. Auch die in Form von Abwärme bereitgestellte thermische Energie der Brennstoffzelle kann vom Trocknungssystem des Brandschutzsystems genutzt werden.

Gemäß einem weiteren Aspekt der vorliegenden Erfindung wird ein Verfahren bereitgestellt zur Reduzierung einer Brandgefahr in einem Schutzraum mit den Schritten:
- Erzeugen eines sauerstoffreduzierten Kathodenabgases, das einen Sauerstoffgehalt von höchstens 15,0vol.% hat, an einem Kathodenabgasausgang einer Brennstoffzelle, wobei der Kathodenabgasausgang von einem Anodenausgang streng getrennt ist,
- Trocknen des sauerstoffreduzierten Kathodenabgases mittels eines Stromabwärts des Kathodenabgasausgangs angeschlossenen Trocknungssystems,
- Bestimmen eines aktuellen Taupunkts des getrockneten, sauerstoffreduzierten Kathodenabgases, und
- Einleiten des getrockneten, sauerstoffreduzierten Kathodenabgases nur dann in den Schutzraum, wenn der aktuelle Taupunkt unterhalb eines einstellbaren maximalen Taupunkts liegt.

Optional kann das Verfahren ferner folgende Schritte aufweisen:
- Ansteuern mindestens eines Verschlussventils, und
- Schließen des mindestens einen Verschlussventils zum Schutzraum hin, wenn der aktuelle Taupunkt des vom Trocknungssystem getrockneten, sauerstoffreduzierten Kathodenabgases bei oder oberhalb des einstellbaren maximalen Taupunkts liegt.

Optional kann das Verfahren ferner folgende Schritte aufweisen:
- Ansteuern mindestens eines Öffnungsventils, und
- Öffnen des mindestens einen Öffnungsventils zur Umgebung, wenn der aktuelle Taupunkt des vom Trocknungssystem getrockneten, sauerstoffreduzierten Kathodenabgases bei oder oberhalb des einstellbaren maximalen Taupunkts liegt. Vorzugsweise wird das mindestens eine Öffnungsventil erst geöffnet und dann das mindestens eine Verschlussventil geschlossen, wenn der aktuelle Taupunkt bei oder oberhalb des einstellbaren maximalen Taupunkts liegt, um eine unerwünschte Druckerhöhung am Kathodenabgasausgang zu vermeiden.

Optional kann das Verfahren ferner ein Öffnen eines Sicherheitsventils aufweisen, wenn der Druck des sauerstoffreduzierten Kathodenabgases stromabwärts der Brennstoffzelle einen Maximalwert übersteigt. Damit wird die Kathode der Brennstoffzelle vor einem schädlichen Überdruck geschützt.

Optional kann das Verfahren ferner ein Erhöhen einer Trocknungsleistung des Trocknungssystems aufweisen, wenn der aktuelle Taupunkt des vom Trocknungssystem getrockneten, sauerstoffreduzierten Kathodenabgases bei oder oberhalb des einstellbaren maximalen Taupunkts liegt. Dies ist sinnvoll, um den aktuellen Taupunkt schneller unterhalb des maximalen Taupunkts zu bekommen, um schneller das sauerstoffreduzierte Kathodenabgas dem Schutzraum zuführen zu können. Vorzugsweise wird die Trocknungsleistung des Trocknungssystems dadurch erhöht, dass eine weitere Trocknungsstufe hinzugeschaltet wird.

Vorzugsweise kann das Trocknen des Verfahrens in einer oder mehreren Trocknungsstufen erfolgen. Bei einer Anwendung mit einem Lager im Temperaturbereich von 100° bis 30C° kann eine Trocknungsstufe ausreichen. Bei einer Anwendung mit einem Tiefkühllager als Schutzraum, bei der der maximale Taupunkt auf beispielsweise -20C° eingestellt wird, können zwei oder mehr Trocknungsstufen sinnvoll sein.

Optional kann das Trocknen in zumindest einer Trocknungsstufe mittels eines als Rotationsentfeuchter ausgeführten Adsorptionstrockners erfolgen, wobei ein dem Kathodenabgasstrom entgegengesetzter Regenerationsluftstrom erhitzt wird, wobei vorzugsweise die Abwärme der Brennstoffzelle zumindest einen Teil einer Heizleistung zur Erhitzung des Regenerationsluftstroms bereitstellt. Vorzugsweise wird der Adsorptionstrockner in einer zweiten Trocknungsstufe eingesetzt, um den aktuellen Taupunkt so weit zu senken, dass das Brandschutzsystem für die Anwendung mit einem Tiefkühllager als Schutzraum eingesetzt werden kann, bei der beispielsweise ein maximaler Taupunkt von -20C° eingestellt wird.

Optional kann bei dem Verfahren sämtliche benötigte elektrische Energie von der Brennstoffzelle bereitgestellt werden. Dies ist insbesondere für eine Anwendung mit mobilen Schutzräumen sinnvoll, die keinen Anschluss an eine externe elektrische Energieversorgung haben.

Optional kann das Verfahren ferner ein Betreiben eines stromabwärts zumindest einer Trocknungsstufe des Trocknungssystem angeordneten Ventilators aufweisen, wodurch der Druck des sauerstoffreduzierten Kathodenabgases stromabwärts des Ventilators erhöht wird. Dies hat den Vorteil, dass der Druck in einer vorgelagerten Trocknungsstufe verringert wird und in einer nachgeschalteten Trocknungsstufe und/oder zum Schutzraum hin erhöht wird. Dies ist insbesondere bei einem nachgeschalteten Adsorptionstrockner sinnvoll, bei dem sichergestellt werden muss, dass keine Regenerationsluft in den Kathodenabgasstrom gesogen wird.

Optional können vor dem Einleiten des getrockneten, sauerstoffreduzierten Kathodenabgases in den Schutzraum in dem getrockneten, sauerstoffreduzierten Kathodenabgas befindliche Restanteile von Wasserstoff mittels eines Wasserstoff-Katalysators chemisch umgesetzt werden. Dies stellt sicher, dass etwaige Restanteile von Wasserstoff nicht in den Schutzraum eingeleitet werden.

Vorzugsweise wird das Verfahren mit einem Lager- und/oder Tiefkühlraum als Schutzraum eingesetzt. Bei einem Schutzraum in Form eines Lagerraums mit Temperaturen von beispielsweise 100° bis 30C° kann eine Trocknungsstufe ausreichend sein. Für die Anwendung mit einem Tiefkühlraum als Schutzraum werden vorzugsweise zwei Trocknungsstufen eingesetzt.

Die Erfindung wird im Folgenden detaillierter anhand der beiliegenden Figuren erläutert. Es zeigen:
- Fig. 1: einen ersten Teil eines Ausführungsbeispiels eines erfindungsgemäßen Brandschutzsystems;
- Fig. 2: eine erste Ausführungsform eines zweiten Teils des Brandschutzsystems, der sich an dem in Figur 1 gezeigten ersten Teil des Brandschutzsystems anschließt; und
- Fig. 3: eine zweite Ausführungsform eines zweiten Teils des Brandschutzsystems, der sich an dem in Figur 1 gezeigten ersten Teil des Brandschutzsystems anschließt.

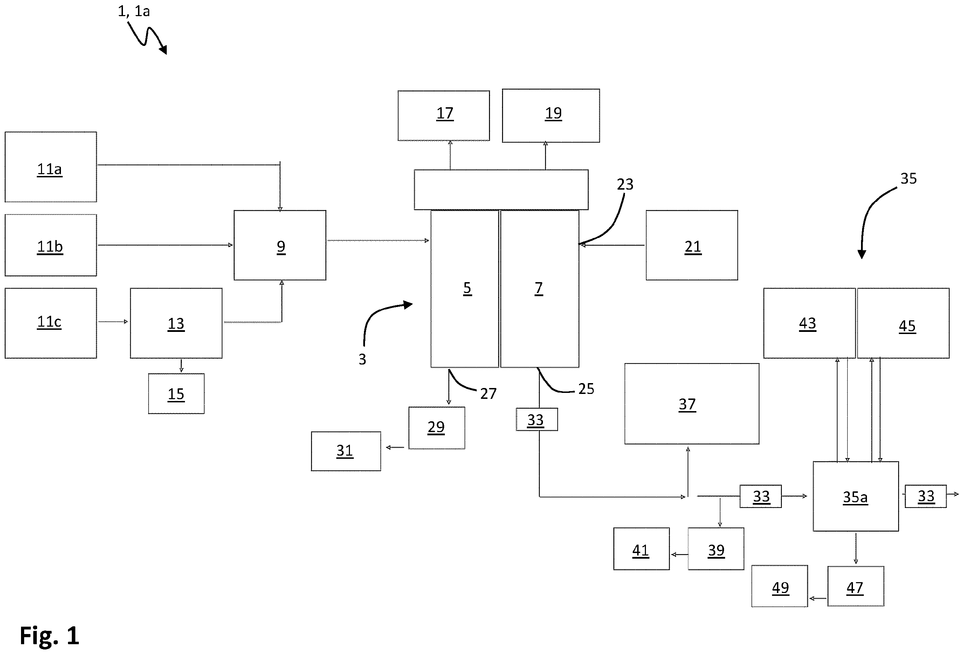

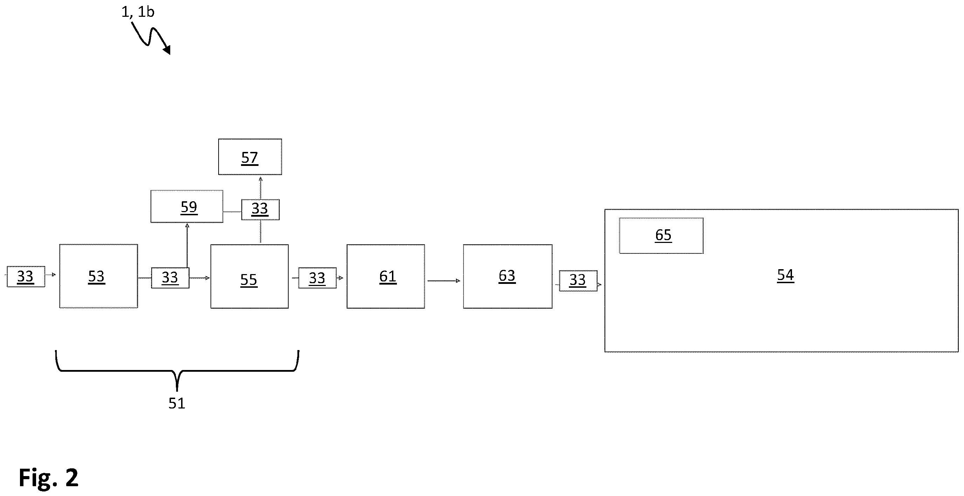

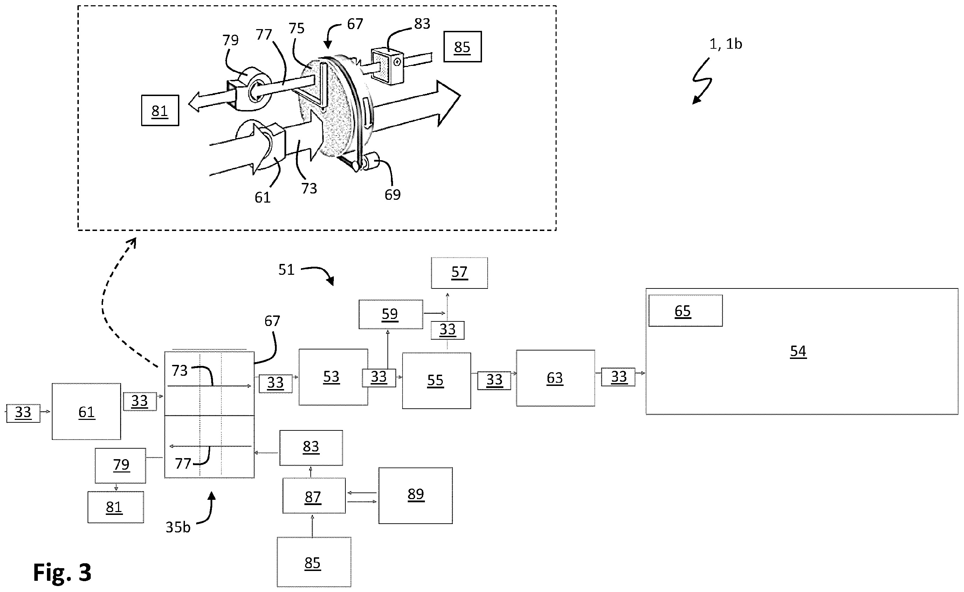

In den Figuren sind insgesamt zwei Ausführungsbeispiele eines erfindungsgemäßen Brandschutzsystems 1 gezeigt. Ein erster Teil 1a des Brandschutzsystems 1 ist für beide Ausführungsformen gleich und in Figur 1 gezeigt. Die Ausführungsbeispiele unterscheiden sich daher nur in einem zweiten Teil 1b des Brandschutzsystems 1, wobei Figur 2 den zweiten Teil 1b für das erste Ausführungsbeispiel zeigt und Figur 3 den zweiten Teil 1b für das zweite Ausführungsbeispiel. Die beiden Ausführungsbeispiele unterscheiden sich im Wesentlichen dadurch, dass das erste Ausführungsbeispiel gemäß Figur 2 ein Trocknungssystem mit nur einer Trocknungsstufe aufweist und das zweite Ausführungsbeispiel ein Trocknungssystem mit zwei Trocknungsstufen. Das erste Ausführungsbeispiel mit der einstufigen Trocknung dient vorzugsweise dem Brandschutz von Lagern, welche beispielsweise in einem Temperaturbereich von 10C°-30C° betrieben werden. Das zweite Ausführungsbeispiel mit einer zweistufigen Trocknung kann für den Brandschutz in Tiefkühllagern eingesetzt werden, welche im Bereich von unter 0C° betrieben werden.

Wie in Figur 1 gezeigt, weist das Brandschutzsystem 1 eine Brennstoffzelle 3 in Form einer PEMFC auf. Die PEMFC 3 weist eine Anode 5 und eine Kathode 7 auf. Die Anode 5 der Brennstoffzelle 3 wird aus einer Brennstoffversorgung 9 mit Brennstoff gespeist. Die Brennstoffversorgung 9 ist hier eine Wasserstoffversorgung, die ihrerseits aus einer oder mehreren Brennstoffquellen 11a, 11b, 11c mit Wasserstoff als Brennstoff gespeist werden kann. Beispielsweise kann die Brennstoffquelle 11a ein Wasserstoffspeicher sein, der beispielsweise über einen vor Ort installierten Elektrolyseur oder über Anlieferung gefüllt oder ganz ausgetauscht werden kann. Zusätzlich oder alternativ dazu kann eine Wasserstoffpipeline 11b als Wasserstoffquelle dienen. Alternativ oder zusätzlich dazu kann ein Methanolspeicher 11c verwendet werden, wobei das Methanol in einem nachgeschalteten Reformer 13 in Wasserstoff und Kohlendioxid getrennt wird, wobei das Kohlendioxid in einem Kohlendioxidausgang 15 abgeführt wird.

Bei Betrieb der Brennstoffzelle 3 stellt diese eine elektrische Leistung 17 und in Form von Abwärme eine thermische Leistung 19 bereit. Die Kathode 7 der Brennstoffzelle 3 weist einen Kathodeneingang 23 auf, über den die Kathode 7 mit Umgebungsluft 21 gespeist werden kann. Ferner weist die Kathode 7 einen Kathodenabgasausgang 25 auf, an dem sauerstoffreduziertes Kathodenabgas mit einem Sauerstoffgehalt von höchstens 15,0vol.-% am Kathodenabgasausgang 25 abgeführt wird. Auch die Anode 5 verfügt in dem gezeigten Ausführungsbeispiel über einen Ausgang 27, der von dem Kathodenabgasausgang 25 allerdings streng getrennt ist, d.h. nicht zusammengeführt ist. Der Anodenabgasausgang 27 dient in einem Flow-Through-Betriebsmodus einem Wasserstoff-Purge 29, der ggf. notwendig ist, um die Anode 5 vor einem Wasserstoffüberdruck zu schützen und Wasserstoffrestbestandteile abzulassen. Der Wasserstoff wird dann an die Umgebung 31 abgegeben. Bei dem erfindungsgemäßen Brandschutzsystem 1 ist es allerdings wesentlich, dass der Wasserstoff nicht in die Abgasleistung 33 der Kathode 7 geführt wird, sondern der Kathodenabgasausgang 25 streng getrennt ist vom Anodenabgasausgang 27.

Über Leitungen 33 wird das sauerstoffreduzierte Kathodenabgas einem stromabwärts des Kathodenabgasausgangs 25 angeschlossenen Trocknungssystem 33 zum Trocknen des sauerstoffreduzierten Kathodenabgases zugeführt. In Figur 1 ist eine erste Trocknungsstufe 35a des Trocknungssystems 35 gezeigt. Stromaufwärts der ersten Trocknungsstufe 35a des Trocknungssystems 35 ist ein Sicherheitsventil 37 angeordnet, das selbsttätig und/oder angesteuert zur Umgebungsluft öffnet, wenn der Druck des sauerstoffreduzierten Kathodenabgases am Kathodenabgasausgang 25 einen Maximalwert übersteigt. Da das Kathodenabgas bereits Wasser in Tröpfchenform enthalten kann, kann dieses über einen Wasserablauf 39 und einen Siphon 41 bereits vor der ersten Trocknungsstufe 35a des Trocknungssystems 35 abgeführt werden.

Die erste Trocknungsstufe 35a wird hier über einen Freiluftkühler43 und/oder einen Kaltwassersatz 45 betrieben, wobei Wasser 47 dem Kathodenabgas entzogen wird und über einen Siphon 49 abläuft. Das in der ersten Trocknungsstufe 35a getrocknete, sauerstoffreduzierte Kathodenabgas wird dann überdas Leitungssystem 33 dem zweiten Teil 1b des Brandschutzsystems 1 zugeleitet.

In der in Figur 2 gezeigten ersten Ausführungsform des zweiten Teils 1b des Brandschutzsystems 1 weist das Trocknungssystem 35 keine weitere Trocknungsstufe auf. Das in der einzigen Trocknungsstufe 35a des Trocknungssystems 35 getrocknete, sauerstoffreduzierte Kathodenabgas wird hier einem dem Trocknungssystem 35 nachgeschalteten Kontrollsystem 51 zugeführt. Das Kontrollsystem 51 ist dazu eingerichtet, mittels eines Taupunktsensors 53 einen aktuellen Taupunkt des vom Trocknungssystem 35 getrockneten, sauerstoffreduzierten Kathodenabgases zu bestimmen und das getrocknete, sauerstoffreduzierte Kathodenabgas nur dann zu einem Schutzraum 54 durchzulassen, wenn der aktuelle Taupunkt unterhalb eines einstellbaren maximalen Taupunkts liegt. Dazu weist das Kontrollsystem 51 ein ansteuerbares Verschlussventil 55 in Form eines 3/2-Wegeventils auf, das ansteuerbar ist, den Kathodenabgasstrom zum Schutzraum 54 hin zu verschließen und das Kathodenabgas zur Umgebung 57 hin abzulassen. Da das 3/2-Wegeventil 55 ggf. nicht schnell genug öffnen oder schließen kann, ist ein Öffnungsventil 59 in Form eines schnell schaltbaren Magnetventils im Kontrollsystem 51 vorgesehen, um den Kathodenabgasstrom zur Umgebung 57 hin schnell zu öffnen, bevor durch das Schließen des Verschlussventils 55 ein Überdruck in der Kathodenabgasleitung 33 entsteht, der schädlich für die Kathode 7 der Brennstoffzelle 3 sein kann.

Hat das getrocknete, sauerstoffreduzierte Kathodenabgas einen ausreichend niedrigen Taupunkt, ist oder wird das Verschlussventil 55 geöffnet und ein nachgeschalteter Ventilator 61 drückt das getrocknete, sauerstoffreduzierte Kathodenabgas in den Schutzraum 54. Zwischen dem Ventilator 61 und dem Schutzraum 54 ist hier noch ein optionaler Wasserstoff-Katalysator 63 zwischengeschaltet, der dazu eingerichtet ist, in dem getrockneten, sauerstoffreduzierten Kathodenabgas befindliche Restanteile von Wasserstoff vor dem Einleiten in den Schutzraum 54 chemisch umzusetzen.

Im Schutzraum 54 befindet sich ein Überwachungssystem 65, das die Atmosphäre im Schutzraum 54 überwacht. Das Überwachungssystem 65 kann beispielsweise die Sauerstoffkonzentration, die Stickstoffkonzentration und/oder die Kohlendioxidkonzentration der Atmosphäre im Schutzraum 54 messen und die Zufuhr von getrocknetem, sauerstoffreduziertem Kathodenabgas regeln. Dadurch kann eine gewünschte Sauerstoffkonzentration in der Atmosphäre des Schutzraums 54 kontinuierlich aufrechterhalten werden. Vorzugsweise wird das Brandschutzsystem 1 insgesamt nur bei Bedarf betrieben, der vom Überwachungssystem 65 ausgelöst wird. Das Brandschutzsystem 1 kann so lange ruhen, wie sich ein ausreichend niedriger Sauerstoffgehalt in der Atmosphäre des Schutzraums 54 befindet. Alternativ dazu kann die Brennstoffzelle 3 des Brandschutzsystems 1 zur Bereitstellung von elektrischer Leistung und/oder thermischer Leistung betrieben werden, wenn kein Kathodenabgas für den Brandschutz benötigt wird. Das Kathodenabgas wird dann einfach an die Umgebung 57 abgegeben. Der Schutzraum 54 ist in dem in Figur 2 gezeigten Ausführungsbeispiel vorzugsweise ein Lagerraum, der im Temperaturbereich von 10C° bis 30C° betrieben wird.

Figur 3 zeigt ein zweites Ausführungsbeispiel, bei dem der zweite Teil 1b des Brandschutzsystems 1 eine zweite Trocknungsstufe 35b des Trocknungssystems 35 aufweist. Der Schutzraum 54 ist hier ein Tiefkühllager, das bei Temperaturen unterhalb des Gefrierpunkts von Wasser betrieben wird. Stromabwärts der zweiten Trocknungsstufe 35b ist das in Figur 3 gezeigte Ausführungsbeispiel identisch mit dem in Figur 2 gezeigten ersten Ausführungsbeispiel mit Ausnahme der Position des Ventilators 61. Der Ventilator 61 ist hier nämlich zwischen die erste Trocknungsstufe 35a und die zweite Trocknungsstufe 35b geschaltet.

Die zweite Trocknungsstufe 35b des Trocknungssystems 35 weist hier einen Adsorptionstrockner 67 in Form eines Rotationsentfeuchters auf, dessen Funktionsweise im gestrichelten Kasten von Figur 3 verdeutlicht wird. Der Rotationsentfeuchter 67 wird mit einem Motor 69 zur Rotation angetrieben. Der Ventilator 61 drückt das in der ersten Trocknungsstufe 35a vorgetrocknete, sauerstoffreduzierte Kathodenabgas als ein Kathodenabgasstrom 73 axial durch den sich rotierenden Rotationsentfeuchter 67. Das Kathodenabgas gibt im Rotationsentfeuchterdurch Adsorption Feuchtigkeit an die inneren Oberflächen des Rotationsentfeuchters 67 ab. In einem dicht vom Kathodenabgasstrom 73 abgetrennten Segment 75 des Rotationsentfeuchters 67 werden die inneren Oberflächen des Rotationsentfeuchters 67 durch einen Regenerationsluftstrom 77 getrocknet. Der Regenerationsluftstrom 77 ist dem Kathodenabgasstrom entgegengesetzt und wird durch ein Regenerationsluftgebläse 79 in den Rotationsentfeuchter 67 gesaugt. Die befeuchtete Regenerationsluft wird dann an die Umgebung 81 abgegeben. Um die Trocknungsleistung des Adsorptionstrockners 67 zu erhöhen, wird die Regenerationsluft vor dem Eintritt in den Rotationsentfeuchter 67 mittels einer Heizung 83 erhitzt bzw. vorgewärmt. Zusätzlich oder alternativ zur Heizung 83 kann zur Erhitzung des Regenerationsluftstroms 77 zumindest teilweise die thermische Leistung 19 der Brennstoffzelle verwendet werden. Zur weiteren Erhöhung der Trocknungsleistung kann die aus der Umgebung 85 entnommene Regenerationsluft in einem Trockner 87 mittels eines Kaltwassersatzes 89 getrocknet werden, bevor es in der Heizung 83 und/oder mittels der Abwärme 19 der Brennstoffzelle 3 erhitzt wird.

Durch die stromaufwärtige Anordnung des Ventilators 61 im Kathodenabgasstrom bezüglich des Rotationsentfeuchters 67 und die stromabwärtige Anordnung des Regenerationsluftgebläses 79 im Regenerationsluftstrom bezüglich des Rotationsentfeuchters 67 wird sichergestellt, dass im Kathodenabgasstrom 73 ein höherer Druck besteht als im Regenerationsluftstrom 77, sodass keine Regenerationsluft durch etwaige Undichtigkeiten in den Kathodenabgasstrom 73 gelangen kann.

Durch die zweite Trocknungsstufe 35b lässt sich das Kathodenabgas soweit trocknen, dass der aktuelle Taupunkt unterhalb von beispielsweise eingestellten -20C° liegen kann, was durch den Taupunktsensor 53 des Kontrollsystems 51 kontrolliert werden kann. Durch den niedrigen Taupunkt trägt das Kathodenabgas nur eine sehr geringe Wärmemenge, wenngleich die Temperatur des Kathodenabgases 50C° oder mehr betragen kann. Dadurch führt eine Zuleitung des relativ heißen, aber sehr trockenen Kathodenabgasstroms in das Tiefkühllager 54 nicht zu einem hohen Wärmeeintrag in das Tiefkühllager 54. Eine Kühlung des Kathodenabgasstroms ist daher nicht notwendig. Die Funktionsweise des Kontrollsystems 51 ist in dem in Figur 3 gezeigten zweiten Ausführungsbeispiel identisch mit der oben beschriebenen Funktionsweise des Kontrollsystems 51 im ersten Ausführungsbeispiel gemäß Figur 2.

### Bezugszeichenliste

- 1: Brandschutzsystem
- 1a: erster Teil des Brandschutzsystems
- 1b: zweiter Teil des Brandschutzsystems
- 3: Brennstoffzelle
- 5: Anode
- 7: Kathode
- 9: Brennstoffzufuhr
- 11a: Wasserstoffspeicher
- 11b: Wasserstoffpipeline
- 11c: Methanolspeicher
- 13: Reformer
- 15: Kohlendioxidausgang
- 17: elektrische Leistung
- 19: thermische Leistung
- 21: Umgebungsluft
- 23: Kathodeneingang
- 25: Kathodenabgasausgang
- 27: Anodenabgasausgang
- 29: Wasserstoff-Purge
- 31: Umgebung
- 33: Kathodenabgasleitung
- 35: Trocknungssystem
- 35a: erste Trocknungsstufe
- 35b: zweite Trocknungsstufe
- 37: Sicherheitsventil
- 39: Wasserauslass
- 41: Siphon
- 43: Freiluftkühler
- 45: Kaltwassersatz
- 47: Wasser
- 49: Siphon
- 51: Kontrollsystem
- 53: Taupunktsensor
- 54: Schutzraum
- 55: Verschlussventil
- 57: Umgebung
- 59: Öffnungsventil
- 61: Ventilator
- 63: Wasserstoff-Katalysator
- 65: Überwachungssystem
- 67: Adsorptionstrockner/Rotationsentfeuchter
- 69: Motor
- 73: Kathodenabgasstrom
- 75: Segment des Rotationsentfeuchters
- 77: Regenerationsluftstrom
- 79: Regenerationsluftgebläse
- 81: Umgebung
- 83: Heizung
- 85: Umgebungsluft
- 87: Trockner
- 89: Kaltwassersatz

## Patentansprüche

1. Brandschutzsystem (1) zur Reduzierung einer Brandgefahr in einem Schutzraum, wobei das Brandschutzsystem (1) aufweist:
- eine Brennstoffzelle (3) mit einem von einem Anodenausgang (27) streng getrennten Kathodenabgasausgang (25) zur Bereitstellung eines sauerstoffreduzierten Kathodenabgases mit einem Sauerstoffgehalt von höchstens 15,0 Vol.-% am Kathodenabgasausgang (25),
- ein stromabwärts des Kathodenabgasausgangs (25) angeschlossenes Trocknungssystem (35) zum Trocknen des sauerstoffreduzierten Kathodenabgases, bevor das sauerstoffreduzierte Kathodenabgas in den Schutzraum (54) eingeleitet wird, und
- ein Kontrollsystem (51), das dazu eingerichtet ist, einen aktuellen Taupunkt des vom Trocknungssystem (35) getrockneten, sauerstoffreduzierten Kathodenabgases zu bestimmen und das getrocknete, sauerstoffreduzierte Kathodenabgas nur dann in den Schutzraum (54) einzuleiten, wenn der aktuelle Taupunkt unterhalb eines einstellbaren maximalen Taupunkts liegt.

2. Brandschutzsystem (1) nach Anspruch 1, wobei das Kontrollsystem (51) mindestens ein ansteuerbares Verschlussventil (55) aufweist, wobei das Kontrollsystem (51) dazu eingerichtet ist, das mindestens eine Verschlussventil (55) anzusteuern und zum Schutzraum (54) hin zu verschließen, wenn der aktuelle Taupunkt des vom Trocknungssystem (35) getrockneten, sauerstoffreduzierten Kathodenabgases bei oder oberhalb des einstellbaren maximalen Taupunkts liegt.

3. Brandschutzsystem (1) nach Anspruch 1 oder 2, wobei das Kontrollsystem (51) mindestens ein ansteuerbares Öffnungsventil (59) aufweist, wobei das Kontrollsystem (51) dazu eingerichtet ist, das mindestens eine Öffnungsventil (59) anzusteuern und zur Umgebung (31) zu öffnen, wenn der aktuelle Taupunkt des vom Trocknungssystem (35) getrockneten, sauerstoffreduzierten Kathodenabgases bei oder oberhalb des einstellbaren maximalen Taupunkts liegt.

4. Brandschutzsystem (1) nach Anspruch 2 und 3, wobei das mindestens eine Verschlussventil (55) und das mindestens eine Öffnungsventil (59) separat ansteuerbare Ventile sind und/oder in mindestens einem 3/2-Wegeventil integriert sind.

5. Brandschutzsystem (1) nach einem der vorhergehenden Ansprüche, mit mindestens einem Sicherheitsventil (37), das stromaufwärts des Trocknungssystems (35) angeordnet ist und selbsttätig und/oder vom Kontrollsystem (51) angesteuert zur Umgebungsluft öffnet, wenn der Druck des sauerstoffreduzierten Kathodenabgases einen Maximalwert übersteigt.

6. Brandschutzsystem (1) nach einem der vorhergehenden Ansprüche, wobei das Trocknungssystem (35) einen Adsorptionstrockner aufweist, wobei der Adsorptionstrockner als Rotationsentfeuchter (67) mit einem dem Kathodenabgasstrom (73) entgegengesetzten und erhitzten Regenerationsluftstrom (77) ausgeführt ist, wobei vorzugsweise eine Heizleistung zur Erhitzung des Regenerationsluftstroms (77) zumindest teilweise von der Abwärme der Brennstoffzelle (3) bereitgestellt wird.

7. Brandschutzsystem (1) nach einem der vorhergehenden Ansprüche, ferner mit einem Ventilator (61), der stromabwärts zumindest einer Trocknungsstufe (35a, 35b) des Trocknungssystems (35) angeordnet und dazu eingerichtet ist, den Druck des sauerstoffreduzierten Kathodenabgases stromabwärts des Ventilators (61) zu erhöhen.

8. Brandschutzsystem (1) nach einem der vorhergehenden Ansprüche, ferner mit einem Wasserstoff-Katalysator (63), der dazu eingerichtet ist, in dem getrockneten, sauerstoffreduzierten Kathodenabgas befindliche Restanteile von Wasserstoff vor dem Einleiten in den Schutzraum (54) chemisch umzusetzen.

9. Mobiler oder stationärer Schutzraum (54) mit einem Brandschutzsystem (1) nach einem der vorhergehenden Ansprüche, wobei der Schutzraum (54) vorzugsweise ein Lager- und/oder Tiefkühlraum ist, der vorzugsweise zumindest teilweise mit elektrischer Energie betreibbar ist, die von der Brennstoffzelle (3) bereitstellbar ist.

10. Verfahren zur Reduzierung einer Brandgefahr in einem Schutzraum (54) mit den Schritten:
- Erzeugen eines sauerstoffreduzierten Kathodenabgases, das einen Sauerstoffgehalt von höchstens 15,0 Vol.-% hat, an einem Kathodenabgasausgang (25) einer Brennstoffzelle (3), wobei der Kathodenabgasausgang (25) von einem Anodenausgang (27) streng getrennt ist,
- Trocknen des sauerstoffreduzierten Kathodenabgases mittels eines stromabwärts des Kathodenabgasausgangs (25) angeschlossenen Trocknungssystems (35),
- Bestimmen eines aktuellen Taupunkts des getrockneten, sauerstoffreduzierten Kathodenabgases, und
- Einleiten des getrockneten, sauerstoffreduzierten Kathodenabgases nur dann in den Schutzraum (54), wenn der aktuelle Taupunkt unterhalb eines einstellbaren maximalen Taupunkts liegt.

11. Verfahren nach Anspruch 10, ferner mit:
- Ansteuern mindestens eines Verschlussventils (55), und
- Schließen des mindestens einen Verschlussventils (55) zum Schutzraum (54) hin, wenn der aktuelle Taupunkt des vom Trocknungssystem (35) getrockneten, sauerstoffreduzierten Kathodenabgases bei oder oberhalb des einstellbaren maximalen Taupunkts liegt.

12. Verfahren nach Anspruch 10 oder 11, ferner mit:
- Ansteuern mindestens eines Öffnungsventils (59), und
- Öffnen des mindestens einen Öffnungsventils (59) zur Umgebung (31), wenn der aktuelle Taupunkt des vom Trocknungssystem (35) getrockneten, sauerstoffreduzierten Kathodenabgases bei oder oberhalb des einstellbaren maximalen Taupunkts liegt.

13. Verfahren nach einem der Ansprüche 10 bis 12, wobei das Trocknen in zumindest einer Trocknungsstufe (35a, 35b) mittels eines als Rotationsentfeuchter (67) ausgeführten Adsorptionstrockners erfolgt, wobei ein dem Kathodenabgasstrom (73) entgegengesetzter Regenerationsluftstrom (77) erhitzt wird, wobei vorzugsweise die Abwärme der Brennstoffzelle (3) zumindest einen Teil einer Heizleistung zur Erhitzung des Regenerationsluftstroms (77) bereitstellt.

14. Verfahren nach einem der Ansprüche 10 bis 13, ferner mit:
- Betreiben eines stromabwärts zumindest einer Trocknungsstufe (35a, 35b) des Trocknungssystems (35) angeordneten Ventilators (61), wodurch der Druck des sauerstoffreduzierten Kathodenabgases stromabwärts des Ventilators (61) erhöht wird.

15. Verfahren nach einem der Ansprüche 10 bis 14, wobei vor dem Einleiten des getrockneten, sauerstoffreduzierten Kathodenabgases in den Schutzraum (54) in dem getrockneten, sauerstoffreduzierten Kathodenabgas befindliche Restanteile von Wasserstoff mittels eines Wasserstoff-Katalysators (63) chemisch umgesetzt werden.
